# DEMANDE DE BREVET EUROPEEN

(11) **EP 1 985 497 A1**
(43) Date de publication de la demande: **29.10.2008**
(21) Numéro de dépôt: 06764344.5
(22) Date de dépôt: 24.05.2006
(51) Int. Cl.: B60R 7/12

(54) **PORTE-PARAPLUIES POUR AUTOMOBILES**

(30) Priorité: 12.07.2005 ES 200501601 U
(71) Demandeur: Medina Lopez, Antonio Vicente, 18600 Motril Granada (ES)
(72) Inventeur: Medina Lopez, Antonio Vicente, 18600 Motril Granada (ES)
(86) Numéro de dépôt international: PCT/ES2006/000278
(87) Numéro de publication internationale: WO 2007/006821

(57) **Abrégé**

Le porte parapluies pour voitures, composé d'un réceptacle (1) dont à l'intérieur il y a une grille (2) pour que les parapluies mouillés soit maintenus, alors que la partie inférieure du réceptacle détermine le dispositif pour vider l'eau des parapluies.

## Description

### Secteur technique

L'invention présente concerne l'amélioration des conditions d'usage dans l'équipement des voitures, celle ci propose un porte parapluies qui permet de recueillir l'eau lorsque les parapluies sont mouillés.

### Etat technique

Le problème de l'emplacement des parapluies mouillés dans les voitures est bien connu puisque l'eau qui s'égoutte des parapluies occasionne de l'humidité et détrempe l'intérieur des véhicules, ce qui provoque des odeurs désagréables ainsi que des détériorations.

Pour ranger les parapluies il existe des housses textiles en plastique, lesquelles ne servent pas à recueillir l'eau lorsqu'ils sont mouillés. Celles-ci ne résolvent donc pas le problème lié à l'humidité ni celui de la détérioration de la voiture.

Il existe aussi des sacs imperméables adaptés à la forme des parapluies, de façon à ce qu'ils puissent être rangés, en évitant ainsi que les parapluies mouillés humidifies les éléments avec qui ils sont en contact, l'eau s'égouttant à l'intérieur du sac.

Cette solution comporte des inconvénients car les sacs étant jetables cela devient cher à l'usage fréquent, de plus il se peut que lorsque vous avez besoin du sac il ne sera pas à votre disposition.

### Objet de l'invention

Conformément à l'invention, l'objet proposé est un porte parapluies destiné à faire parti de l'équipement pour les voitures avec lequel est résolu d'une manière avantageuse le problème de l'emplacement des parapluies mouillés dans les voitures.

Ce porte parapluies est composé d'un réceptacle (1) dimensionné conformément à la forme et à la grandeur des parapluies dans lequel il incorpore une grille (2) ainsi qu'un dispositif en dessous pour le ramassage de l'eau.

On obtient ainsi un objet pour lequel les parapluies peuvent être rangé en disposant ceux-ci sur la grille (2) de l'intérieur du réceptacle (1). Les parapluies restent donc parfaitement protégés et lorsqu'ils sont mouillés, ils n'abîment pas les objets environnants et ne gène pas les passagers de la voiture pendant que l'eau s'égoutte et est recueillie dans la partie inférieur au réceptacle afin d'être évacuée.

Pour cet objectif, le réceptacle (1) du porte parapluies peut être constitué de matière rigide ou flexible et peut adopter n'importe quelle configuration permettant de disposer, a l'intérieur, une grille (2) pour placer un ou plusieurs parapluies appuyés sur celle-ci. De plus sans que le concept ne s'altère, le réceptacle (1) peut être ouvert ou posséder une fermeture de n'importe quel type pour cacher l'intérieur.

La grille (2) d'appui pour les parapluies, à l'intérieur du réceptacle, peut dans certains cas être fixée mais il est prévu un montage avec extraction possible, facilitant ainsi le nettoyage de l'intérieur du réceptacle quand ce sera nécessaire.

Le dispositif de ramassage de l'eau dans la partie inférieur du réceptacle possède un écoulement pour l'évacuation de l'eau vers l'extérieur, en rassemblant cette évacuation dans un conduit d'expulsion de l'eau situé en dessous de la voiture.

Ce dispositif de ramassage de l'eau peut également incorporer un plateau extractif récepteur d'eau, grâce auquel on peut retirer l'eau qui s'est égouttée des parapluies, ceux-ci étant posé sur la grille du réceptacle.

Sous ce concept de structuration constructive et fonctionnelle, le réceptacle du porte parapluie peut être installé lors de la construction de l'habitacle de la voiture de manière fixe ou dissimulé comme certains compartiments conventionnels dans une voiture.

Dans le même concept, le porte parapluies peut s'incorporer comme un objet accessoire dans l'équipement de la voiture en le fixant avec un vis, par un emplâtre, avec un crochet ou par n'importe qu'elle autre forme conventionnelle et qui peut s'adapter tant aux nouvelles voitures qu'aux anciennes.

L'entrée du porte parapluies peut s'établir dans n'importe quelle partie de l'habitacle des voitures où il sera possible de faire le montage et oú l'emplacement sera accessible aux usagers, comme par exemple dans les portières, entre les sièges, sur la poçarties postérieurs du dossier des sièges...
Ce porte parapluies comprend donc des caractéristiques avantageuses.

### Descriptions des dessins

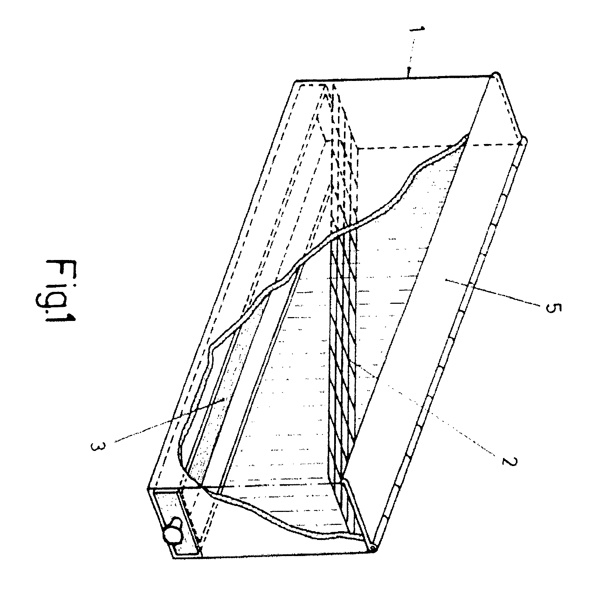

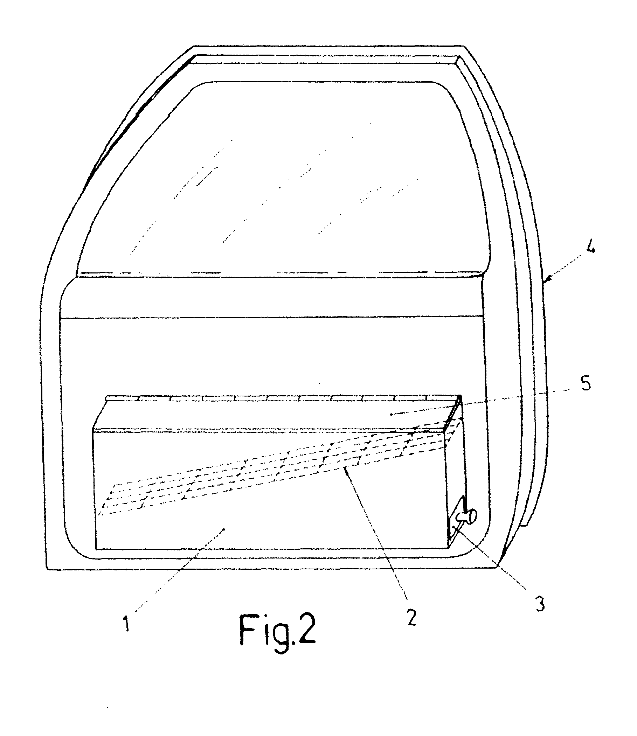

Le dessin 1 montre en perspective un porte parapluies conforme à l'invention, selon un exemple de réalisation.
Le dessin 2 représente l'application pratique du porte parapluies sur la portière de la voiture.

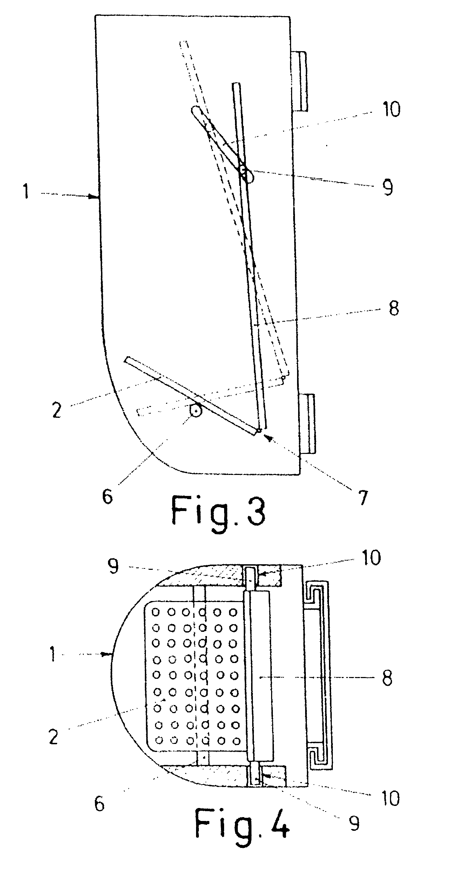

Les dessins 3 et 4 montrent un porte parapluies vu de profil et de haut avec des parapluies déposés à l'intérieur.

### Description détaillée de l'invention

L'objet de l'invention se réfère donc à un porte parapluies pour les voitures. Le concept de réalisation prévoit un emplacement pour les parapluies et un pour recueillir l'eau qui s'égoutte lorsque ceux-ci sont mouillés.

Ce porte parapluies se compose donc d'un réceptacle (1) structuré comme un conteneur de n'importe quelles formes avec les dimensions qui s'adaptent à la configuration et à la taille des parapluies. L'application est prévue pour que même si les matières sont rigides ou flexibles, il n'y ait pas de modification du concept.

A l'intérieur du réceptacle (1) mentionné, il y a une grille (2) qui servira d'appuie pour les parapluies et qui permettra donc qu'ils s'égouttent à travers. Celle-ci pourra être incorporé (dessin 1 et 2) dans n'importe quelles positions lors du montage.

Il est possible de disposer la grille (2) de façon incliner (dessin 1 et 2) bien qu'elle puisse aussi se positionner à l'horizontal en n'étant fixée à l'intérieur du réceptacle. Mais il est préférable de prévoir un dispositif d'assemblage dans lequel il sera possible d'extraire la grille (2) ce qui facilitera le nettoyage du réceptacle quand cela est nécessaire. Lorsque la grille est en position inclinée un écart est prévu en haut de la partie inférieur ce qui permettra de déterminer une limite pour déposer les parapluies dans le porte parapluies.

Selon un exemple de réalisation concret, (dessin 3 et 4) le porte parapluies peut se positionner verticalement, la grille est disposée en assemblage sur un axe (6) de la partie inférieure de l'intérieur du réceptacle (1). Cette grille est liée grâce à une articulation (7) à l'extrémité avec une plaque verticale guidée par des pivots dans des emplacements latéraux inclinés dans le sens contraire de l'articulation.

Dans cette position et dans des conditions normales, la grille reste inclinée grâce au poids de la plaque (8), qui reste vertical par rapport à la paroi du réceptacle (1) plus proche de l'articulation (4) alors que lorsqu'un parapluie est rangé, le poids de celui-ci s'appuie sur la grille (2) puis bascule dans une position horizontale ce qui relève la plaque (8) qui bascule la partie inférieure guidée par la fente (10) avec laquelle ces plaques réalisent une pression sur les parapluies introduit en les maintenant a l'intérieur du réceptacle (1) .

En dessous de la grille (2), la partie inférieure du réceptacle (1) détermine un système afin de recueillir l'eau qui s'écoule des parapluies mouillés dans le porte parapluies.

Pour cela, la partie inférieure du réceptacle possède des orifices pour drainer de manière à ce que, par exemple, si le porte parapluies est intégré dans une portière, l'évacuation de l'eau puisse se faire depuis le réceptacle (1) directement par les orifices de drainage, que la portière possède dans la parie inférieure.

L'incorporation du porte parapluies peut se faire dans n'importe quelle partie intérieure de la voiture. L'évacuation de l'eau depuis le réceptacle (1) s'établi grâce a un dispositif comprenant un tube qui conduit l'eau jusqu'à l'extérieur, par exemple, en sortant par la partie inférieure de la voiture afin d'enlever l'eau.

Pour une question de pratique, il est possible de disposer d'un plateau dans la partie inférieure du réceptacle (1) grâce a un dispositif d'assemblage dans lequel le plateau (3) peut être extrait, de façon à ce que l'eau des parapluies puisse être recueilli en retirant le plateau (3) puis en le vidant à l'extérieur.

Le porte parapluies peut être disposé dans n'importe quel endroit de la voiture dans la mesure où il ne gène pas et où il soit accessible aux passagers, comme par exemple, sur la partie intérieure des portières (4), ou entre les sièges avants etc. car il s'adapte en fonction de l'emplacement choisi.

Dans le dispositif d'assemblage, le réceptacle (1) du porte parapluies peut être intégré dans la réalisation des équipements de la voiture ou être ajouté en tant qu'accessoire par la suite. Il devra être monté avec des vis, des crochets, de la colle... en sachant qu'il est possible de l'adapter autant à une voiture neuve qu'à une voiture plus ancienne.

L'ensemble des porte parapluies peuvent contenir une capacité d'un ou plusieurs parapluies. Le réceptacle peut avoir une fermeture afin de couvrir l'intérieur dans un but esthétique mais ce n'est pas une obligation car cela ne nuira pas au fonctionnement du porte parapluies.

## Revendications

1. Le porte parapluies pour voiture, destiné à être incorporé dans n'importe quel partie de l'habitacle intérieur est composé d'un réceptacle (1) qui est structuré de matière rigide ou flexible. Cette configuration permet de contenir un ou plusieurs parapluies à l'intérieur déposé dans le réceptacle (1) sur lequel est déposé une grille qui sert d'appuie pour les parapluies et qui laisse passer l'eau recueilli dans la partie inférieure du réceptacle (1).

2. En accord avec la première revendication, la grille (2) du porte parapluies pour voiture peut être disposé horizontalement ou incliné à l'intérieur du réceptacle.

3. En accord avec la première et la deuxième revendication, la grille (2) du porte parapluies pour voiture peut être fixée ou démontable.

4. En accord avec la première revendication, la partie intérieure du réceptacle possède des orifices pour évacuer l'eau, avec la possibilité de faire passer l'eau dans un tube qui la versera à l'extérieur.

5. En accord avec la première revendication, il est possible d'incorporer dans la partie inférieure du réceptacle (1) un plateau (3) dans lequel l'eau sera déversée .Cet assemblage pourra donc être extrait afin d'enlever l'eau du plateau (3) et donc de la vidée à l'extérieur du véhicule.

6. En accord avec la première revendication, il est possible de cacher l'intérieur réceptacle (1) en intégrant une fermeture (5).

7. En accord avec la première revendication, le réceptacle (1) peut être intégré lors de la construction de la voiture.

8. En accord avec la première revendication, le réceptacle (1) peut être intégré en tant qu'accessoire pour les équipements de voitures et qui sera à monter des vis, des crochets, de la colle etc.

9. En accord avec la première revendication, le réceptacle peut être vertical et incorporer une grille (2). Celle-ci disposant d'un assemblage basculant sur un axe (6) dans la partie inférieure de ce réceptacle (1), et dans l'articulation (7) à l'extrémité de la plaque verticale (8) qui est guidée selon les fentes (10) dans le sens transversal du réceptacle.
